Europäisches Patentamt

European Patent Office

Office européen des brevets

(11) Veröffentlichungsnummer: **0 574 443 B1**

(12) **EUROPÄISCHE PATENTSCHRIFT**

(45) Veröffentlichungstag der Patentschrift: **19.07.95**

(51) Int. Cl.⁶: **C01B 15/029**, B01J 23/52, B01J 23/46

(21) Anmeldenummer: **92905506.9**

(22) Anmeldetag: **28.02.92**

(86) Internationale Anmeldenummer:
**PCT/EP92/00435**

(87) Internationale Veröffentlichungsnummer:
**WO 92/15521 (17.09.92 92/24)**

(54) **VERFAHREN ZUR HERSTELLUNG VON WASSERSTOFF PEROXYD AUS DEN ELEMENTEN.**

(30) Priorität: **05.03.91 DE 4107017**
**23.08.91 DE 4127918**

(43) Veröffentlichungstag der Anmeldung:
**22.12.93 Patentblatt 93/51**

(45) Bekanntmachung des Hinweises auf die
Patenterteilung:
**19.07.95 Patentblatt 95/29**

(84) Benannte Vertragsstaaten:
**AT BE CH DE DK ES FR GB GR IT LI LU NL SE**

(56) Entgegenhaltungen:
EP-A- 274 830          EP-A- 0 325 132
EP-A- 0 342 047        FR-A- 2 603 578
US-A- 3 839 192        US-A- 4 048 096
US-A- 4 393 038

(73) Patentinhaber: **SOLVAY INTEROX**
**Rue du Prince Albert, 33**
**B-1050 Bruxelles (BE)**

(72) Erfinder: **LÜCKOFF, Udo**
**Hofheimerstrasse 11**
**D-6234 Hattersheim 1 (DE)**
Erfinder: **PAUCKSCH, Heinrich**
**Richard-Wagner-Strasse 16**
**D-8137 Berg 1 (DE)**
Erfinder: **LUFT, Gerhard**
**Ludwigstrasse 141a**
**D-4109 Mühltal-Traisa (DE)**

(74) Vertreter: **Huber, Bernhard, Dipl.-Chem. et al**
**Patentanwälte**
**H. Weickmann, Dr. K. Fincke**
**F.A. Weickmann, B. Huber**
**Dr. H. Liska, Dr. J. Prechtel, Dr. B. Böhm**
**Postfach 86 08 20**
**D-81635 München (DE)**

**Beschreibung**

Die Erfindung betrifft ein Verfahren zur Herstellung von Wasserstoffperoxid durch Umsetzung von Wasserstoff und Sauerstoff in wäßriger Suspension in Gegenwart eines Katalysators.

Wasserstoffperoxid findet in der Industrie in großen Mengen Verwendung, z.B. zum Bleichen von Holz, Textilien, Papier, Ölen, Fetten, zur Herstellung von Bleichmitteln für die Waschmittelindustrie und insbesondere von Natriumperborat, und für Reinigungsmittel und Kosmetika, zur Haarbleiche, als Ausgangsprodukt für Epoxide, Peroxid-Katalysatoren, Glycerin, Weichmacher, Alkyl- und Acyl-Peroxide, Peroxocarbonsäuren, zur Desinfektion und im Rahmen des Umweltschutzes zunehmend zur Entgiftung und Desodorierung von Wasser, Abwasser und Abluft, zur Zellstoffbleiche, zum Deinking von Altpapier, zur Rauchgas-Entschwefelung, in der Elektronik-Industrie zum Reinigen von Si-Chips, usw.

Aufgrund seiner vielfältigen Verwendungsmöglichkeiten und der Bedeutung in der Industrie kommt deshalb den Herstellungsverfahren für Wasserstoffperoxid eine zunehmende Bedeutung zu. Die üblichen industriellen Verfahren zur Herstellung von Wasserstoffperoxid basieren auf Oxidationsverfahren unter Anwendung von Isopropanol und auf Autoxidationsverfahren unter Anwendung von Anthrachinonen.

Es wurden auch bereits verschiedene Verfahren zur Direktsynthese von Wasserstoffperoxid aus Wasserstoff und Sauerstoff vorgeschlagen.

Die EP-B 0 049 806 beschreibt ein Verfahren zur Direktsynthese von Wasserstoffperoxid unter Verwendung eines Palladium-Trägerkatalysators in einem flüssigen Medium, welches aus Methanol besteht und bis zu 1 Gew.-% Formaldehyd enthält.

Nach der EP-B 0 117 306 wird in einer sauren wäßrigen Lösung, die eine sauerstoffhaltige organische Verbindung enthält, in Gegenwart eines Palladiumkatalysators gearbeitet.

Aus der US-A 4,336,239 ist ein Verfahren zur Direktsynthese aus Wasserstoff und Sauerstoff bekannt, welches in einer sauren wäßrigen Lösung, die Methanol oder Aceton enthält, in Gegenwart eines Trägerkatalysators mit einem Platinmetall, z.B. Palladium, als katalytisch wirksamem Metall durchgeführt wird.

Aus der EP-B 0 049 809 ist ein Verfahren zur Direktsynthese von Wasserstoffperoxid durch Kontakt eines Wasserstoff und Sauerstoff enthaltenden Gasgemisches mit einer sauren wäßrigen Flüssigkeit, die bis zu 95 Vol.-% eines Ketons, Aldehyds oder Alkohols enthält, bekannt, wobei die Wasserstoffperoxidbildung an einem Trägerkatalysator stattfindet und abgelöste Palladiumsalze durch z.B. ein Ionentauscherharz entfernt werden, um die wirksame Lebensdauer des Katalysators zu verlängern und die Zersetzung des gebildeten Wasserstoffperoxids zu inhibieren.

Ein Nachteil der vorstehend beschriebenen Verfahren ist die Verwendung organischer Substanzen als Bestandteil des flüssigen Reaktionsmediums.

Mit der Gegenwart organischer Substanzen ist die Möglichkeit der Bildung organischer Peroxide verbunden, was eine leichte Brennbarkeit der verwendeten Lösungsmittel und die Bildung explosiver Mischungen mit Wasserstoffperoxid (vgl. z.B. Schumb et al., Hydrogen Peroxide, Reinhold Publishing Corporation, 179 (1955); Swern, Organic Peroxides, Wiley - Interscience New York, 26 (1970)), zur Folge haben kann. Auf diese Weise erhöht sich beträchtlich das Gefahrenpotential der auf diesem Wege durchgeführten Direktsynthesen.

Im Hinblick auf eine gefahrlosere Durchführung des Verfahrens und der Reinigung des gebildeten Wasserstoffperoxids, ist es vorteilhafter, die Direktsynthese aus Wasserstoff und Sauerstoff in einem wäßrigen Medium durchzuführen, das möglichst frei von organischen Bestandteilen ist.

Ein solches Verfahren wird in der EP-A 0 132 294 beschrieben, wobei ein kommerziell erhältlicher oder "in situ" hergestellter Palladium-Trägerkatalysator in einem wäßrigen Reaktionsmedium verwendet wird, das im wesentlichen frei von organischen Bestandteilen ist und in dem die Wasserstoffionen- und Chloridionen-Konzentration zwischen 0,01 und 2 mol/l liegt. Die Reaktion wird bei einem Gesamtdruck von bis zu 100 bar durchgeführt.

Aus der EP-A 0 274 830 ist ein ähnliches Verfahren bekannt, bei dem das wäßrige Reaktionsmedium Natriumbromid und Schwefelsäure enthält, wobei die Anwendung von Bromidionen im Vergleich zur Anwendung von Chloridionen in gleicher Konzentration günstigere Ergebnisse im Hinblick auf Selektivität und Ausbeute ergibt. Anstelle von Palladium-Trägerkatalysatoren können auch Trägerkatalysatoren eingesetzt werden, die mit Palladium/Platin-Bimetallen belegt sind (vgl. EP-A 0 342 048).

Aus der US-A 4,393,038 ist ein Verfahren zur Herstellung von Wasserstoffperoxid bekannt, bei dem Wasserstoff durch eine Palladium enthaltende Membran in eine wäßrige Lösung eingeführt wird, die neben gelöstem Sauerstoff stabilisierende Ionen enthält; als Palladium enthaltende Membran wird z.B. eine Gold/Palladium-Röhre verwendet.

Die DE-B 26 55 920 beschreibt ein Verfahren zur Herstellung von Wasserstoffperoxid durch Umsetzung von Wasserstoff mit Sauerstoff in Gegenwart eines Katalysators aus der Platingruppe, der eine bestimmte Menge adsorbierten Wasserstoff enthalten muß, in einem wäßrigen Medium in Gegenwart von Salzsäure und Phosphorsäure. Als Katalysatoren werden auch Legierungen oder Gemische der Platinmetalle mit anderen Metallen z.B. Gold genannt. Es wird jedoch nur die Verwendung eines Palladium-Kieselsäure-Katalysators offenbart. Der Katalysator wird in kolloidaler Form oder auf einem Träger eingesetzt, und es wird eine Wasserstoffperoxid-Konzentration im Ablauf von 8 bis 11 Gew.-% erhalten.

Die EP-A 0 366 419 offenbart ein Verfahren zur Herstellung von Wasserstoffperoxid durch Reaktion von Wasserstoff und Sauerstoff in einem sauren wäßrigen Medium. Als Katalysator wird bei diesem Verfahren mindestens ein Metall der Gruppe VIII auf einem hydrophoben Träger verwendet, wobei Pt, Pd, Ru, Rh und Ir bevorzugt sind. Es wird jedoch nur die Verwendung eines Platin-Kohle-Katalysators offenbart. Ferner enthält das Reaktionsmedium 0,03 mol/l Halogenidionen.

Die EP-A 0 415 448 offenbart ein Verfahren zur Herstellung von Wasserstoffperoxid durch katalytische Reaktion von Wasserstoff mit Sauerstoff in einem flüssigen wäßrigen Reaktionsmedium, wobei Metalle der Pt-Gruppe, insbesondere Platin und Palladium entweder alleine oder auf einem festen Träger verwendet werden. Als Katalysatoren werden Palladium-Aktivkohle und kolloidales Palladium offenbart.

Obwohl durch die Verwendung eines wäßrigen Mediums, das keine organischen Bestandteile enthält, die mit der Verwendung von organischen Bestandteilen verbundenen Probleme vermieden werden können, ist auch die Verwendung der oben genannten wäßrigen Systeme mit Palladium- oder Platin-Katalysatoren sowie mit einem relativ hohen Gehalt an Säuren oder/und Halogeniden im Hinblick auf die apparativen Erfordernisse, die damit verbundene Umweltbelastung und insbesondere auch im Hinblick auf ihre, die Stabilität des gebildeten Wasserstoffperoxids verringernde Wirkung, nicht zufriedenstellend.

Der vorliegenden Erfindung liegt deshalb die Aufgabe zugrunde, ein Verfahren zur Herstellung von Wasserstoffperoxid durch direkte Umsetzung von Wasserstoff und Sauerstoff bereitzustellen, bei dem die vorstehend genannten Nachteile weitgehend vermieden werden können, und das einfach und in hohem Maße sicher durchzuführen ist.

Insbesondere soll ein Verfahren zur Herstellung von Wasserstoffperoxid aus den Elementen bereitgestellt werden, mit dem eine Erhöhung der Bildungsgeschwindigkeit, Selektivität oder/und Ausbeute von Wasserstoffperoxid gegenüber Verfahren des Standes der Technik zu erzielen ist.

Die erfindungsgemäße Aufgabe wird gelöst durch ein Verfahren zur Herstellung von Wasserstoffperoxid durch Umsetzung eines Gasgemisches, das Wasserstoff und Sauerstoff enthält, in einem wäßrigen, weniger als 2 Vol.-% flüssige organische Bestandteile enthaltenden Reaktionsmedium und in Gegenwart eines metallischen Katalysators, welches dadurch gekennzeichnet ist, daß man als Katalysator eine Palladium/Gold-Legierung mit 5 bis 95 Atomprozent Gold oder ein Palladium/Iridium- oder Palladium/Rhodium-Bimetall mit 1 bis 15 Atomprozent Iridium bzw. Rhodium verwendet und daß das Reaktionsmedium bis zu 0,01 Mol/l Bromidionen und bis zu 2 Mol/l einer Säure enthält.

Das wäßrige Reaktionsmedium enthält weniger als 2 Vol.-%, vorzugsweise weniger als 0,5 Vol.-% flüssige organische Bestandteile. Besonders bevorzugt ist das Reaktionsmedium völlig frei von organischen Bestandteilen.

Vorzugsweise enthält das Reaktionsmedium 0,000001 Mol/l bis 0,01 Mol/l Bromidionen und am meisten bevorzugt zwischen 0,00001 Mol/l und 0,001 Mol/l Bromidionen.

Das bei dem erfindungsgemäßen Verfahren verwendete Gasgemisch enthält vorzugsweise nicht mehr als 20 Vol.-% Wasserstoff. Weiterhin wird die Reaktion vorzugsweise bei erhöhtem Druck, besonders bevorzugt bei einem Gesamtdruck von mindestens 10 bar und am meisten bevorzugt bei einem Gesamtdruck von 40 bis 200 bar durchgeführt.

Die Reaktionstemperatur liegt im allgemeinen zwischen 0 und 100°C und vorzugsweise zwischen 15 und 70°C.

Weiterhin enthält das Reaktionsmedium bis zu 2 Mol/l, bevorzugt 0,001 Mol/l bis 0,5 Mol/l, einer Säure, bei der es sich jedoch vorzugsweise nicht um eine Halogenwasserstoffsäure handeln soll. Diese Säure ist günstigerweise eine starke anorganische Säure, beispielsweise Schwefelsäure oder/und Phosphorsäure.

Verwendet man als Katalysator ein Palladium/Iridium- bzw. Palladium/Rhodium-Bimetall, so beträgt der Gehalt an Iridium bzw. Rhodium vorzugsweise 3 bis 10 Atom-%. Verwendet man hingegen als Katalysator eine Palladium/Gold-Legierung, so beträgt der Goldgehalt vorzugsweise 5 bis 80 Atom-%, besonders bevorzugt 10 bis 50 Atom-% und am meisten bevorzugt 20 bis 50 Atom-%.

Der Katalysator kann sowohl in Form eines feinteiligen Metallpulvers als auch gebunden an ein festes Trägermaterial vorliegen. Die Herstellung eines Katalysators in Form eines feinteiligen Metallpulvers erfolgt vorzugsweise durch Reduktion eines Palladiumhalogenids und eines Gold-, Iridium- oder Rhodiumhalogenids im gewünschten Verhältnis zueinander in wäßriger Lösung mit einem geeigneten Reduktionsmittel, insbesondere Natriumborhydrid, und anschließende Entfernung der Halogenidionen aus der wäßrigen Lösung.

Verwendet man einen Katalysator, der an ein festes Trägermaterial gebunden vorliegt, so ist der Anteil von katalytisch aktivem Metall vorzugsweise 0,1 bis 10 Gew.-%, besonders bevorzugt 0,5 bis 5 Gew.-% und am meisten bevorzugt 1 bis 3 Gew.-%, auf Basis des Gesamtgewichts aus Metall und Trägermaterial. Das Trägermaterial ist vorzugsweise ein hydrophiles Material, das aus der Gruppe, bestehend aus Aktivkohle, Materialien auf Kieselsäurebasis (z.B. Silicagel, wasserhaltige Kieselsäure), Siliciumcarbid, Zeolithen, Titandioxid, Zirkoniumdioxid und Aluminiumoxid ausgewählt ist. Besonders bevorzugt verwendet man Aluminiumoxid als Trägermaterial. Die Herstellung des trägergebundenen Katalysators erfolgt vorzugsweise durch Reduktion eines Palladiumhalogenids und eines Gold-, Iridium- oder Rhodiumhalogenids im gewünschten Verhältnis zueinander in wäßriger Lösung und in Gegenwart der entsprechenden Menge an Trägermaterial mit einem Reduktionsmittel, insbesondere einem Formiat, und anschließende Entfernung der Halogenidionen aus der Lösung.

Ein bevorzugter Katalysator im Rahmen der Erfindung besteht aus einer Palladium-Gold-Legierung mit einem Gehalt von 10 bis 30 Atom-% Gold auf einem Aluminiumoxidträger. Die Legierungsmenge beträgt vorzugsweise 0,5 bis 5, besonders bevorzugt 0,1 bis 3 Gew.-% bezogen auf das Gesamtgewicht des Katalysators.

Ein für die Erfindung besonders geeigneter Katalysator kann hergestellt werden, indem man eine salzsaure Lösung von Palladiumchlorid und Goldchlorid im gewünschten Verhältnis Palladium : Gold mit der entsprechenden Menge an Trägermaterial, vorzugsweise Aluminiumoxid, mischt, bei schwach saurem pH-Wert, zweckmäßig zwischen pH 5 und 6,5, erhitzt, ein Reduktionsmittel, insbesondere ein Formiat, im Überschuß zusetzt und nach erfolgter Reduktion die Chloridionen entfernt. Das Erhitzen bei schwach saurem pH-Wert wird zweckmäßig bei Temperaturen zwischen 50 und 90°C durchgeführt, die Reduktion wird ebenfalls bei erhöhter Tempratur bis zur Siedetemperatur durchgeführt.

Durch Einsatz der erfindungsgemäßen Katalysatoren läßt sich überraschenderweise eine Erhöhung der Bildungsgeschwindigkeit, Selektivität oder/und Ausbeute der Wasserstoffperoxidbildung im Vergleich zu üblichen Palladiumkatalysatoren erreichen.

Das erfindungsgemäße Verfahren kann halbkontinuierlich, z.B. in einem Rührautoklaven, der das flüssige wäßrige Reaktionsmedium enthält, durchgeführt werden, wobei das Sauerstoff und Wasserstoff enthaltende Gasgemisch unter Rühren hindurchgeleitet wird. Hierbei werden die Temperatur, der Druck und die Durchflußmengen der Gase entsprechend kontrolliert und entsprechend geregelt. Das erfindungsgemäße Verfahren läßt sich aber auch unter Verwendung entsprechender Apparaturen auf kontinuierliche Weise durchführen.

Die folgenden Beispiele dienen zur weiteren Verdeutlichung der vorliegenden Erfindung.

## Beispiele 1 bis 11

8.4 mg eines kommerziell erhältlichen Palladium/Gold-Trägerkatalysators, der mit 5 Gew. % Gesamtmetall auf Aktivkohle Da 32/4 (Heraeus GmbH) belegt ist, wurden in einen mit Teflon ausgekleideten 500 ml Rührautoklaven eingetragen und in 115 g 0.05 molarer Schwefelsäure, welcher 0.000068 Mol/l Natriumbromid enthielt, suspendiert.

Der Autoklav wurde verschlossen und mit 10 bar Sauerstoff beaufschlagt. Den Sauerstoff ließ man anschließend ab. Diese Prozedur wiederholte man zweimal, um Reste von Stickstoff aus dem Autoklaven zu entfernen. Danach gab man 80 bar Sauerstoff auf und temperierte auf 25°C. Nach Erreichen der Solltemperatur wurden 0.177 Nl/min Sauerstoff und 0.0345 Nl/min Wasserstoff unter Rühren durchgeleitet. Der Gesamtdruck von 80 bar wurde mit einem Druckregler konstant gehalten. Die Reaktionszeit betrug 177 min.

Die verbrauchte Menge Wasserstoff Pro Stunde und Gramm Palladium und die Selektivität wurde durch die Gewichtszunahme nach Ende der Reaktion und die gebildete Menge Wasserstoffperoxid durch Titration mit einer 0.1 n Cersulfat-Lösung bestimmt.

Die umgesetzte Menge Wasserstoff wurde folgendermaßen berechnet:

$$\text{Masse } H_2O_2 = \text{titrierte Mole } H_2O_2 \times 34$$
$$\text{Mole } H_2O = (\text{Gewichtszunahme} - \text{Masse } H_2O_2)/18$$
$$\text{Umges. Mole } H_2 = \text{Mole } H_2O_2 - \text{Mole } H_2O$$
$$\text{Umges. Mole } H_2/(h \times gPd) = \text{Umges. Mole } H_2 \times 60(\text{Reak.zeit} \times gPd)$$

Die Selektivität wurde folgendermaßen berechnet:

$$S = \text{titrierte Mole } H_2O_2 / \text{Umgesetzte Mole } H_2$$

4

Tabelle 1

| Beispiel Nr. | Katalysator % Pd / % Au | Umges.Mole H$_2$(hxgPd) Mol/(hxgPd) | Geb. Mole H$_2$O$_2$/(hxgPd) Mol/(hxgPd) | Selektivität % |
|---|---|---|---|---|
| 1 | 5 / - | 32.4 | 20.8 | 64 |
| 2 | 4.5/0.5 | 36.0 | 22.7 | 63 |
| 3 | 4.25/0.75 | 31.6 | 17.7 | 56 |
| 4 | 4.0/1.0 | 37.4 | 24.0 | 64 |
| 5 | 3.5/1.5 | 51.7 | 33.1 | 64 |
| 6 | 3.0/2.0 | 48.3 | 30.9 | 64 |
| 7 | 2.5/2.5 | 81.5 | 49.7 | 61 |
| 8 | 2.0/3.0 | 61.4 | 32.6 | 53 |
| 9 | 1.0/4.0 | 99.7 | 47.8 | 48 |
| 10 | 0.5/4.5 | 73.9 | 29.5 | 40 |
| 11 | __ /5.0 | 0 | 0 | - |

## Beispiele 12 bis 16

Die Reaktion wurde wie in den Beispielen 1 bis 11 beschrieben durchgeführt. Jedoch wurde der Gesamtdruck aur 60 bar erniedrigt und die Reaktionszeiit auf 159 min verkürzt.

Tabelle 2

| Beispiel Nr. | Katalysator % Pd / % Au | Umges.Mole H$_2$(hxgPd) Mol/(hxgPd) | Geb. Mole H$_2$O$_2$/(hxgPd) Mol/(hxgPd) | Selektivität % |
|---|---|---|---|---|
| 12 | 5.0/ - | 36.4 | 26.9 | 74 |
| 13 | 4.25/0.75 | 41.5 | 29.0 | 70 |
| 14 | 3.5/1.5 | 40.5 | 30.3 | 75 |
| 15 | 2.5/2.5 | 51.9 | 38.9 | 75 |
| 16 | 1.0/4.0 | 136.2 | 99.5 | 73 |

## Beispiele 17 bis 20

Die Reaktion wurde wie in den Beispielen 1 bis 11 beschrieben durchgeführt, mit der Ausnahme, daß der Gesamtdruck 40 bar betrug und die Reaktionszeit 159 min.

Tabelle 3

| Beispiel Nr. | Katalysator % Pd / % Au | Umges.Mole H$_2$(hxgPd) Mol/(hxgPd) | Geb. Mole H$_2$O$_2$/(hxgPd) Mol/(hxgPd) | Selektivität % |
|---|---|---|---|---|
| 17 | 4.25/0.75 | 28.2 | 19.7 | 70 |
| 18 | 3.5/1.5 | 32.6 | 23.8 | 73 |
| 19 | 2.5/2.5 | 58.4 | 40.9 | 70 |
| 20 | 1.0/4.0 | 110.4 | 77.3 | 70 |

**Beispiele 21 bis 25**

Die Reaktion wurde wie in den Beispielen 1 bis 11 beschrieben durchgeführt, mit der Ausnahme, daß die Temperatur 10°C betrug, 17.5 mg Katalysator eingetragen wurden und die Reaktionszeit auf 248 min. verlängert wurde.

Tabelle 4

| Beispiel Nr. | Katalysator % Pd / % Au | Umges.Mole $H_2$(hxgPd) Mol/(hxgPd) | Geb. Mole $H_2O_2$/(hxgPd) Mol/(hxgPd) | Selektivität % |
|---|---|---|---|---|
| 21 | 5.0/ - | 22.2 | 15.5 | 70 |
| 22 | 4.25/0.75 | 25.4 | 17.9 | 70 |
| 23 | 3.5/1.5 | 25.9 | 18.9 | 73 |
| 24 | 2.5/2.5 | 42.2 | 27.4 | 64 |
| 25 | 1.0/4.0 | 73.7 | 47.2 | 64 |

**Beispiele 26 bis 30**

Die Reaktion wurde wie in den Beispielen 21 bis 25 beschrieben durchgeführt, mit der Ausnahme, daß die Natriumbromidkonzentration 0.000165 mol/l betrug.

Tabelle 5

| Beispiel Nr. | Katalysator % Pd / % Au | Umges.Mole $H_2$(hxgPd) Mol/(hxgPd) | Geb. Mole $H_2O_2$/(hxgPd) Mol/(hxgPd) | Selektivität % |
|---|---|---|---|---|
| 26 | 5.0/ - | 22.1 | 14.8 | 67 |
| 27 | 4.25/0.75 | 34.5 | 21.0 | 61 |
| 28 | 3.5/1.5 | 30.9 | 19.7 | 64 |
| 29 | 2.5/2.5 | 32.9 | 21.4 | 65 |
| 30 | 1.0/4.0 | 79.1 | 49.8 | 63 |

**Beispiele 31 bis 38**

40 mg Palladium/Gold - Trägerkatalysator wurden in einen 300 ml Rührautoklaven eingetragen und in 40 ml 1.6 molarer Phosphorsäure, welche 0.0006 Mol/l Natriumbromid enthielt, suspendiert. Die gerührte flüssige Reaktionsmischung wurde auf 25°C temperiert und mit einer Gasmischung, welche 4.5 % Wasserstoff und 95.5% Sauerstoff enthielt, durchströmt. Der Gasstrom betrug 100 Nl/h, der Druck 80 bar und die Reaktionszeit 120 min. Die Auswertung der Versuche erfolgte analog der Beispiele 1 - 30 über die Titration des Wasserstoffperoxids und die Gewichtszunahme nach Ende der Reaktion.

Tabelle 6

| Beispiel Nr. | Katalysator % Pd / % Au | Umges.Mole $H_2$(hxgPd) Mol/(hxgPd) | Geb. Mole $H_2O_2$/(hxgPd) Mol/(hxgPd) | Selektivität % |
|---|---|---|---|---|
| 31 | 5 / - | 22.5 | 14.2 | 63 |
| 32 | 4.5/0.5 | 22.2 | 15.6 | 70 |
| 33 | 4.25/0.75 | 22.4 | 15.6 | 70 |
| 34 | 4.0/1.0 | 24.4 | 17.0 | 70 |
| 35 | 3.5/1.5 | 27.1 | 19.5 | 72 |
| 36 | 3.0/2.0 | 29.2 | 20.7 | 71 |
| 37 | 2.5/2.5 | 31.0 | 21.7 | 70 |
| 38 | 2.0/3.0 | 30.0 | 19.2 | 64 |

## Beispiele 39 bis 42

A) Verfahren zur Herstellung der Katalysatoren

Der verwendete Katalysator war ein durch Aufbringen von 2 Gew.% Legierung, bestehend aus Palladium und Gold, auf einen Träger aus Aluminiumoxid erhaltenes Präparat. Der Katalysator wurde auf folgende Weise hergestellt: Ein feines Pulver aus Aluminiumoxid wurde zu einer Lösung gegeben, die durch Auflösung einer bestimmten Menge Palladiumchlorid und Goldchlorid in wäßriger 0,1 N Salzsäure in solcher Menge erhalten worden war, daß die Menge des metallischen Palladiums und Golds insgesamt 2 Gew.% bezogen auf Aluminiumoxid und die Verhältnisse von Palladium zu Gold 50, 30 und 10 At% Gold betrugen. Die Suspension wurde gerührt und ein pH-Wert von 6 mittels 10 Gew.%-iger Natronlauge eingestellt und anschließend auf 80°C erwärmt. Zu dieser Lösung wurde eine wäßrige Natriumformiat-Lösung, die aus 15 g Natriumformiat und 85 g entionisiertem Wasser hergestellt wurde, in solcher Menge zugegeben, daß das Molverhältnis Natriumformiat zu Palladium 40 betrug. Die Suspension wurde zum Sieden erhitzt und 5 min nach erfolgter Reduktion langsam abgekühlt. Der Katalysator wurde abfiltriert, mit entionisiertem Wasser chloridfrei gewaschen und 10 h im Vakuum bei 100°C getrocknet.

B) $H_2O_2$-Synthese

40 mg eines nach A) erhaltenen Palladium/Gold-Trägerkatalysators, der mit 2 Gew.% Gesamtmetall auf Aluminiumoxid belegt ist, wurden in einen mit Teflon ausgekleideten 500 ml Rührautoklaven eingetragen und in 160 g 0,05 molarer Schwefelsäure, welche 0,00003 mol/l Natriumbromid enthielt, suspendiert.

Der Autoklav wurde verschlossen und mit 10 bar Sauerstoff beaufschlagt. Den Sauerstoff ließ man anschließend ab. Diese Prozedur wiederholte man zweimal, um Reste von Stickstoff aus dem Autoklaven zu entfernen. Danach wurden 80 bar Sauerstoff aufgegeben und auf 25°C temperiert. Wenn die Solltemperatur erreicht war, wurden 0,168 Nl/min Sauerstoff und 0,03365 Nl/min Wasserstoff unter Rühren durchgeleitet. Der Gesämtdruck von 80 bar wurde mit einem Druckregler konstant gehalten. Die Reaktionszeit betrug 600 min.

Tabelle 7

| Beispiel Nr. | Katalysator At% Pd / At% Au | Umges.Mole $H_2$/(h*gPd) mol/(h*gPd) | Geb. Mole $H_2O_2$/(h*gPd) mol/(h*gPd) | Selektivität % |
|---|---|---|---|---|
| 39 | 100 / - | 28,9 | 11,9 | 41 |
| 40 | 90 / 10 | 42,9 | 16,7 | 39 |
| 41 | 70 / 30 | 77,8 | 35,8 | 46 |
| 42 | 50 / 50 | 117,5 | 50,5 | 43 |

**Beispiele 43 bis 44**

Die Reaktion wurde wie in den Beispielen 39 bis 42 beschrieben durchgeführt, jedoch wurde der Gesamtdruck auf 40 bar erniedrigt.

Tabelle 8

| Beispiel Nr. | Katalysator At% Pd / At% Au | Umges.Mole $H_2$/(h*gPd) mol/(h*gPd) | Geb.Mole $H_2O_2$/(h*gPd) mol/(h*gPd) | Selektivität % |
|---|---|---|---|---|
| 43 | 100 / - | 26,3 | 9,7 | 37 |
| 44 | 50 / 50 | 89,3 | 26,8 | 30 |

**Beispiele 45 bis 46**

Die Reaktion wurde wie in den Beispielen 39 bis 42 beschrieben durchgeführt, jedoch wurde der Gesamtdruck auf 20 bar erniedrigt.

Tabelle 9

| Beispiel Nr. | Katalysator At% Pd / At% Au | Umges.Mole $H_2$/(h*gPd) mol/(h*gPd) | Geb.Mole $H_2O_2$/(h*gPd) mol/(h*gPd) | Selektivität % |
|---|---|---|---|---|
| 45 | 100 / - | 15,5 | 5,6 | 36 |
| 46 | 50 / 50 | 63,1 | 19,6 | 31 |

**Beispiele 47 bis 48**

Die Reaktion wurde wie in den Beispielen 1 bis 4 beschrieben durchgeführt, jedoch wurde der Wasserstoffstrom auf 0,02356 Nl/h erniedrigt.

Tabelle 10

| Beispiel Nr. | Katalysator At% Pd / At% Au | Umges.Mole $H_2$/(h*gPd) mol/(h*gPd) | Geb.Mole $H_2O_2$/(h*gPd) mol/(h*gPd) | Selektivität % |
|---|---|---|---|---|
| 47 | 100 / - | 22,4 | 10,8 | 48 |
| 48 | 50 / 50 | 83,0 | 26,8 | 40 |

**Beispiele 49 bis 50**

Die Reaktion wurde wie in den Beispielen 1 bis 4 beschrieben durchgeführt, jedoch wurde der Wasserstoffstrom auf 0,01346 Nl/h erniedrigt.

Tabelle 11

| Beispiel Nr. | Katalysator At% Pd / At% Au | Umges.Mole H$_2$/(h*gPd) mol/(h*gPd) | Geb.Mole H$_2$O$_2$/(h*gPd) mol/(h*gPd) | Selektivität % |
|---|---|---|---|---|
| 49 | 100 / - | 16,3 | 8,2 | 50 |
| 50 | 50 / 50 | 47,7 | 23,4 | 49 |

**Beispiel 51**

Herstellung eines trägergebundenen Palladium/Iridium-Katalysators

Ein feines Pulver aus Aluminiumoxid wurde zu einer Lösung gegeben, die durch Auflösung von Palladiumchlorid und Iridiumchlorid in wäßriger 0,1 N Salzsäure erhalten worden war, so daß die Menge des metallischen Palladiums und Iridiums insgesamt 2 Gew.-% bezogen auf Aluminiumoxid war und das Verhältnis von Palladium zu Iridium zwischen 3 und 10 Atom-% Iridium lag. Die Suspension wurde gerührt, ein pH-Wert von 6 mittels 10 Gew.-%iger Natronlauge eingestellt und anschliessend auf 80°C erwärmt. Zu dieser Lösung wurde eine wäßrige Natriumformiat-Lösung, die aus 15 g Natriumformiat und 85 g entionisiertem Wasser hergestellt wurde, in einer solchen Menge zugegeben, daß das Molverhältnis Natriumformiat zu Palladium 40:1 betrug. Die Suspension wurde zum Sieden erhitzt und 5 Minuten nach erfolgter Reduktion langsam abgekühlt. Der Katalysator wurde abfiltriert, mit entionisiertem Wasser chloridfrei gewaschen und 10 Stunden im Vakuum bei 100°C getrocknet.

**Beispiel 52**

Herstellung von Palladium/Gold-, Palladium/Iridium-, Palladium/Rhodium-Katalysatoren in feinverteilter Form

Als Katalysatoren wurden durch gemeinsame Reduktion ihrer Chloride aus der Lösung erhaltener Präzipitate verwendet. Der Katalysator wurde auf folgende Weise hergestellt. Die Chloride der zu reduzierenden Metalle wurden in derjenigen Menge gemischt, die der Zusammensetzung des herzustellenden Katalysators entsprach. Die gemischten Salze wurden in ca. 50 ml ca. 1 Mol/l Salzsäure pro g Katalyator gelöst und mit einer Geschwindigkeit von 1 ml/sec. in 66 ml einer auf 80°C erwärmten und gerührten wäßrigen Reduktionslösung pro g Katalysator getropft, die 8 Gew.-% Natriumhydroxid und 5 Gew.-% Natriumborhydrid enthielt. Die Reduktion wurde in einer geeigneten Glasapparatur, bestehend aus einem Rundkolben mit aufgesetztem Rückflußkühler, Thermometer, Rührwerk und Tropftrichter durchgeführt. Die auf diese Weise erhaltenen Präparate wurden abfiltriert, mit entionisiertem Wasser neutral gewaschen und im Vakuum bei 100°C getrocknet. Die trockenen Präparate wurden anschließend 1 h einem Wasserstoff-strom von 1 Nm$^3$/h bei 240°C ausgesetzt.

**Beispiele 53 bis 56**

40 mg eines nach Beispiel 51 hergestellten Palladium/Iridium-Bimetall-Trägerkatalysators, der mit 2 Gew.-% Gesamtmetall auf Aluminiumoxid belegt ist, wurden in einen mit Teflon ausgekleideten 500 ml Rührautoklaven eingetragen und in 150 g 0,05 M Schwefelsäure, welche 0,00003 mol/l Natriumbromid enthielt, suspendiert.

Der Autoklav wurde verschlossen und mit 10 bar Sauerstoff beaufschlagt. Den Sauerstoff ließ man anschließend ab. Diese Prozedur wiederholte man zweimal, um Reste von Stickstoff aus dem Autoklaven zu entfernen. Danach gab man 80 bar Sauerstoff auf und temperierte auf 25°C. War die Solltemperatur erreicht, wurden 0,168 Nl/min Sauerstoff und 0,03365 Nl/min Wasserstoff unter Rühren durchgeleitet. Der Gesamtdruck von 80 bar wurde mit einem Druckregler konstant gehalten. Die Reaktionszeit betrug 600 min.

Die verbrauchte Menge Wasserstoff pro Stunde und Gramm Palladium (H$_2$/(h*gPd)) und die Selektivität bestimmte man durch die Gewichtszunahme nach Ende der Reaktion und die gebildete Menge Wasserstoffperoxid pro Stunde und Gramm Palladium (H$_2$O/(h*gPd)) durch Titration mit einer 0,1 N Cerulfat-Lösung.

Die umgesetzte Menge Wasserstoff wurde folgendermaßen berechnet:

$$\text{Masse } H_2O_2 = \text{titrierte Mole } H_2O_2 * 34$$
$$\text{Mole } H_2O = (\text{Gewichtszunahme - Masse } H_2O_2)/18$$
$$\text{Umges. Mole } H_2 = \text{Mole } H_2O_2 + \text{Mole } H_2O$$
$$\text{Umges. Mole } H_2/(h*gPd) = \text{Umges. Mole } H_2 + 60/(\text{Reak.zeit}*gPd)$$

Die Selektivität wurde folgendermaßen berechnet:

$$S = \text{titrierte Mole } H_2O_2/\text{umgesetzte Mole } H_2$$

Tabelle 12

| Beispiel Nr. | Katalysator At % Pd / At%Ir | Umges.Mole $H_2/(h*gPd)$ mol/(h*gPd) | Geb. Mole $H_2O_2/(h*gPd)$ mol/(h*gPd) | Selektivität % |
|---|---|---|---|---|
| 53 | 100 / - | 28,9 | 11,9 | 41 |
| 54 | 95 / 5 | 44,8 | 22,0 | 49 |
| 55 | 92,3/ 7,7 | 62,7 | 25,1 | 40 |
| 56 | 0 / 100 | 0 | 0 | - |

## Beispiele 57 bis 58

Die Reaktion wurde analog des in den Beispielen 53 bis 56 beschriebenen Verfahrens durchgeführt, jedoch wurde der Gesamtdruck im Autoklaven auf 40 bar erniedrigt.

Tabelle 13

| Beispiel Nr. | Katalysator At % Pd / At%Ir | Umges.Mole $H_2/(h*gPd)$ mol/(h*gPd) | Geb. Mole $H_2O_2/(h*gPd)$ mol/(h*gPd) | Selektivität % |
|---|---|---|---|---|
| 57 | 100 / - | 26,3 | 9,7 | 37 |
| 58 | 92,3/ 7,7 | 45,8 | 17,9 | 39 |

## Beispiele 59 bis 60

Die Reaktion wurde analog des in den Beispielen 53 bis 56 beschriebenen Verfahrens durchgeführt, jedoch wurde der Gesamtdruck im Autoklaven auf 20 bar erniedrigt.

Tabelle 14

| Beispiel Nr. | Katalysator At % Pd / At%Ir | Umges.Mole $H_2/(h*gPd)$ mol/(h*gPd) | Geb. Mole $H_2O_2/(h*gPd)$ mol/(h*gPd) | Selektivität % |
|---|---|---|---|---|
| 59 | 100 / - | 15,5 | 5,6 | 36 |
| 60 | 92,3/ 7,7 | 33,5 | 10,7 | 32 |

## Beispiele 61 bis 62

Die Reaktion wurde analog des in den Beispielen 53 bis 56 beschriebenen Verfahrens durchgeführt, jedoch wurde der Wasserstoffstrom auf 0,02356 Nl/h erniedrigt.

Tabelle 15

| Beispiel Nr. | Katalysator At % Pd / At%Ir | Umges.Mole H$_2$/(h*gPd) mol/(h*gPd) | Geb. Mole H$_2$O$_2$/(h*gPd) mol/(h*gPd) | Selektivität % |
|---|---|---|---|---|
| 61 | 100 / - | 22,4 | 10,8 | 48 |
| 62 | 92,3/ 7,7 | 34,8 | 17,1 | 49 |

**Beispiele 63 bis 64**

Die Reaktion wurde analog des in den Beispielen 53 bis 56 beschriebenen Verfahrens durchgeführt, jedoch wurde der Wasserstoffstrom auf 0,01346 Nl/h erniedrigt.

Tabelle 16

| Beispiel Nr. | Katalysator At % Pd / At%Ir | Umges.Mole H$_2$/(h*gPd) mol/(h*gPd) | Geb. Mole H$_2$O$_2$/(h*gPd) mol/(h*gPd) | Selektivität % |
|---|---|---|---|---|
| 63 | 100 / - | 16,3 | 8,2 | 50 |
| 64 | 92,3/ 7,7 | 21,3 | 10,2 | 48 |

**Beispiele 65 bis 77**

100 mg eines nach Beispiel 52 hergestellten Palladium/Gold-, Palladium/Iridium- oder Palladium/Rhodium-Katalysators wurden in einen mit Teflon ausgekleideten 500 ml Rührautoklaven eingetragen und in 160 g 0,05 M Schwefelsäure, welche 0,001 mol/l Natriumbromid enthielt, suspendiert.

Der Autoklav wurde verschlossen und mit 10 bar Sauerstoff beaufschlagt. Den Sauerstoff ließ man anschließend ab. Diese Prozedur wiederholte man zweimal, um die Reste von Stickstoff aus dem Autoklaven zu entfernen. Danach gab man 40 bar Sauerstoff auf und temperierte auf 25°C. War die Solltemperatur erreicht, wurden 0,168 Nl/min Sauerstoff und 0,01346 Nl/min Wasserstoff unter Rühren durchgeleitet. Der Gesamtdruck von 40 bar wurde mit einem Druckregler konstant gehalten. Die Reaktionszeit betrug 177 min.

Die verbrauchte Menge Wasserstoff pro Stunde und Gramm Palladium, die Selektivität und die gebildete Menge an Wasserstoffperoxid pro Stunde und Gramm Palladium wurde wie in Beispiel 53 bestimmt.

Tabelle 17

| Umges.Mole Geb. Mole | | | | |
|---|---|---|---|---|
| Beispiel Nr. | Katalysator At % Pd / At% (Rh, Ir bzw. Au) | $H_2$/(h*gPd) mol/(h*gPd) | $H_2O_2$/(h*gPd) mol/(h*gPd) | Selektivität % |
| 65 | 100 / - | 0,130 | 0,048 | 37 |
| 66 | - / 100 Rh | 0 | 0 | - |
| 67 | - / 100 Ir | 0 | 0 | - |
| 68 | - / 100 Au | 0 | 0 | - |
| 69 | 95 / 5 Rh | 0,124 | 0,055 | 45 |
| 70 | 90 / 10 Rh | 0,247 | 0,099 | 40 |
| 71 | 95 / 5 Ir | 0,169 | 0,106 | 63 |
| 72 | 90 / 10 Ir | 0,261 | 0,071 | 27 |
| 73 | 95 / 5 Au | 0,149 | 0,060 | 40 |
| 74 | 90 / 10 Au | 0,175 | 0,077 | 44 |
| 75 | 80 / 20 Au | 0,220 | 0,105 | 48 |
| 76 | 70 / 30 Au | 0,288 | 0,153 | 53 |
| 77 | 50 / 50 Au | 0,334 | 0,167 | 50 |

**Beispiele 78 bis 82**

Die Reaktion wurde analog des in den Beispielen 65 bis 77 beschriebenen Verfahrens durchgeführt, mit der Ausnahme, daß die eingesetzte Katalysatormenge auf 40 mg und die Natriumbromidkonzentration auf 0,000147 mol/l reduziert wurde.

Tabelle 18

| Beispiel Nr. | Katalysator At % Pd / At% (Rh, Ir bzw. Au) | Umges.Mole $H_2$/(h*gPd) mol/(h*gPd) | Geb. Mole $H_2O_2$/(h*gPd) mol/(h*gPd) | Selektivität % |
|---|---|---|---|---|
| 78 | 100 / - | 0,178 | 0,071 | 40 |
| 79 | 95 / 5 Ir | 0,289 | 0,191 | 66 |
| 80 | 90 / 10 Rh | 0,493 | 0,281 | 57 |
| 81 | 90 / 10 Au | 0,271 | 0,146 | 54 |
| 82 | 50 / 50 Au | 0,557 | 0,306 | 55 |

**Beispiele 83 bis 87**

Die Reaktion wurde analog des in den Beispielen 65 bis 77 beschriebenen Verfahrens durchgeführt, mit der Ausnahme, daß die eingesetzte Katalysatormenge auf 40 mg und die Natriumbromidkonzentration auf 0,000027 mol/l reduziert wurde.

Tabelle 19

| Beispiel Nr. | Katalysator At % Pd / At% (Rh, Ir bzw. Au) | Umges.Mole $H_2$/(h*gPd) mol/(h*gPd) | Geb. Mole $H_2O_2$/(h*gPd) mol/(h*gPd) | Selektivität % |
|---|---|---|---|---|
| 83 | 100 / - | 0,210 | 0,074 | 36 |
| 84 | 90 / 10 Rh | 0,616 | 0,148 | 24 |
| 85 | 95 / 5 Au | 0,243 | 0,134 | 55 |
| 86 | 90 / 10 Au | 0,286 | 0,157 | 55 |
| 87 | 50 / 50 Au | 0,581 | 0,308 | 53 |

**Beispiele 88 bis 91**

Die Reaktion wurde analog des in den Beispielen 65 bis 77 beschriebenen Verfahrens durchgeführt, mit der Ausnahme, daß die eingesetzte Katalysatormenge auf 40 mg betrug, die Natriumbromidkonzentration auf 0,000147 mol/l reduziert wurde, der Gesamtdruck 60 bar und die Reaktionszeit 10 h betrug.

Tabelle 20

| Beispiel Nr. | Katalysator At % Pd / At% (Rh, Ir bzw. Au) | Umges.Mole $H_2$/(h*gPd) mol/(h*gPd) | Geb. Mole $H_2O_2$/(h*gPd) mol/(h*gPd) | Selektivität % |
|---|---|---|---|---|
| 88 | 100 / - | 0,361 | 0,135 | 37 |
| 89 | 95 / 5 Ir | 0,545 | 0,262 | 48 |
| 90 | 90 / 10 Au | 0,557 | 0,195 | 35 |
| 91 | 50 / 50 Au | 1,173 | 0,422 | 36 |

**Beispiele 92 bis 96**

Die Reaktion wurde analog des in den Beispielen 65 bis 77 beschriebenen Verfahrens durchgeführt, mit der Ausnahme, daß die eingesetzte Katalysatormenge auf 40 mg betrug, die Natriumbromidkonzentration auf 0,000147 mol/l reduziert wurde, der Gesamtdruck 80 bar und die Reaktionszeit 10 h betrug.

Tabelle 21

| Beispiel Nr. | Katalysator At % Pd / At% (Rh, Ir bzw. Au) | Umges.Mole $H_2$/(h*gPd) mol/(h*gPd) | Geb. Mole $H_2O_2$/(h*gPd) mol/(h*gPd) | Selektivität % |
|---|---|---|---|---|
| 92 | 100 / - | 0,507 | 0,187 | 37 |
| 93 | 95 / 5 Ir | 0,639 | 0,269 | 42 |
| 94 | 90 / 10 Au | 0,602 | 0,259 | 43 |
| 95 | 70 / 30 Au | 1,053 | 0,400 | 38 |
| 96 | 50 / 50 Au | 1,465 | 0,586 | 40 |

**Patentansprüche**

1. Verfahren zur Herstellung von Wasserstoffperoxid durch Umsetzung eines Gasgemisches, das Wasserstoff und Sauerstoff enthält, in einem wäßrigen, weniger als 2 Vol.-% flüssige organische Bestandteile enthaltenden Reaktionsmedium und in Gegenwart eines metallischen Katalysators,
   **dadurch gekennzeichnet,**
   daß man als Katalysator eine Palladium/Gold-Legierung mit 5 bis 95 Atomprozent Gold oder ein Palladium/Iridium- oder Palladium/Rhodium-Bimetall mit 1 bis 15 Atomprozent Iridium bzw. Rhodium verwendet und daß das Reaktionsmedium bis zu 0,01 Mol/l Bromidionen und bis zu 2 Mol/l einer Säure enthält.

2. Verfahren nach Anspruch 1,
   **dadurch gekennzeichnet,**
   daß das Reaktionsmedium 0,000001 Mol/l bis 0,01 Mol/l Bromidionen enthält.

3. Verfahren nach Anspruch 1 oder 2,
   **dadurch gekennzeichnet,**
   daß das Reaktionsmedium 0,00001 Mol/l bis 0,001 Mol/l Bromidionen enthält.

4. Verfahren nach einem der Ansprüche 1 bis 3,
   **dadurch gekennzeichnet,**
   daß man als Katalysator ein Palladium/Iridium- bzw. Palladium/Rhodium-Bimetall mit 3 bis 10 Atompro-

EP 0 574 443 B1

zent Iridium bzw. Rhodium verwendet.

5. Verfahren nach einem der Ansprüche 1 bis 3,
   **dadurch gekennzeichnet,**
   daß man als Katalysator eine Palladium/Gold-Legierung mit 10 bis 50 Atomprozent Gold verwendet.

6. Verfahren nach einem der Ansprüche 1 bis 5,
   **dadurch gekennzeichnet,**
   daß man ein Gasgemisch verwendet, das bis zu 20 Vol.-% Wasserstoff enthält.

7. Verfahren nach einem der Ansprüche 1 bis 6,
   **dadurch gekennzeichnet,**
   daß der Gesamtdruck bei der Reaktion mindestens 10 bar beträgt.

8. Verfahren nach Anspruch 7,
   **dadurch gekennzeichnet,**
   daß der Gesamtdruck 40 bis 200 bar beträgt.

9. Verfahren nach einem der Ansprüche 1 bis 8,
   **dadurch gekennzeichnet,**
   daß die Reaktionstemperatur im Bereich von 15 bis 70 °C liegt.

10. Verfahren nach einem der Ansprüche 1 bis 9,
    **dadurch gekennzeichnet,**
    daß das Reaktionsmedium 0,001 Mol/l bis 0,5 Mol/l Säure enthält.

11. Verfahren nach Anspruch 10,
    **dadurch gekennzeichnet,**
    daß die Säure Phosphorsäure und/oder Schwefelsäure ist.

12. Verfahren nach einem der Ansprüche 1 bis 11,
    **dadurch gekennzeichnet,**
    daß das Reaktionsmedium weniger als 0,5 Vol.-% flüssige organische Bestandteile enthält.

13. Verfahren nach einem der Ansprüche 1 bis 12,
    **dadurch gekennzeichnet,**
    daß der Katalysator in Form eines feinteiligen Metallpulvers vorliegt.

14. Verfahren nach Anspruch 13,
    **dadurch gekennzeichnet,**
    daß man einen Katalysator verwendet, der durch Reduktion eines Palladiumhalogenids und eines Gold-, Iridium- oder Rhodiumhalogenids im gewünschten Verhältnis zueinander in wäßriger Lösung mit einem Reduktionsmittel, insbesondere Natriumborhydrid, und anschließende Entfernung der Halogenidionen hergestellt worden ist.

15. Verfahren nach einem der Ansprüche 1 bis 12,
    **dadurch gekennzeichnet,**
    daß der Katalysator an ein festes Trägermaterial gebunden vorliegt.

16. Verfahren nach Anspruch 15,
    **dadurch gekennzeichnet,**
    daß das Trägermaterial aus der Gruppe, bestehend aus Aktivkohle, Materialien auf Kieselsäurebasis, Siliciumcarbid, Zeolithen, Titandioxid, Zirkoniumdioxid und Aluminiumoxid, ausgewählt wird.

17. Verfahren nach Anspruch 16,
    **dadurch gekennzeichnet,**
    daß man ein Trägermaterial aus Aluminiumoxid verwendet.

14

**18.** Verfahren nach einem der Ansprüche 15 bis 17,
**dadurch gekennzeichnet,**
daß der Anteil von katalytisch aktivem Metall 0,1 bis 10 Gew.-% auf Basis des Gesamtgewichts aus Metall und Trägermaterial ist.

**19.** Verfahren nach einem der Ansprüche 15 bis 18,
**dadurch gekennzeichnet,**
daß man einen Katalysator verwendet, der durch Reduktion eines Palladiumhalogenids und eines Gold-, Iridium- oder Rhodiumhalogenids im gewünschten Verhältnis zueinander in wäßriger Lösung und in Gegenwart der entsprechenden Menge Trägermaterial mit einem Reduktionsmittel, insbesondere einem Formiat, und anschließende Entfernung der Halogenidionen hergestellt worden ist.

**20.** Verfahren nach einem der Ansprüche 15 bis 19,
**dadurch gekennzeichnet,**
daß man eine Palladium/Gold-Legierung mit einem Gehalt von 9 bis 95 Atom-% Gold auf einem festen Träger verwendet.

**21.** Verfahren nach Anspruch 20,
**dadurch gekennzeichnet,**
daß der feste Träger Kohlenstoff ist.

**22.** Verfahren nach Anspruch 21,
**dadurch gekennzeichnet,**
daß als Katalysator eine Palladium/Gold-Legierung mit 10 bis 50 Atom-% Gold auf einem Aluminiumoxidträger verwendet wird.

**23.** Verfahren nach Anspruch 22,
**dadurch gekennzeichnet,**
daß man einen Katalysator verwendet, der durch Vermischen einer salzsauren Lösung von Pd-Chlorid und Au-Chlorid im gewünschten Verhältnis Pd:Au mit der entsprechenden Menge Aluminiumoxid, Erhitzen bei schwach saurem pH-Wert, Zusetzen eines Reduktionsmittels, insbesondere eines Formiats, im Überschuß und Entfernen der Chloridionen nach der Reduktion hergestellt worden ist.

**Claims**

**1.** Process for the production of hydrogen peroxide by reacting a gas mixture which contains hydrogen and oxygen in an aqueous reaction medium containing less than 2 % by volume liquid organic components and in the presence of a metallic catalyst,
**wherein**
a palladium/gold alloy containing 5 to 95 atom per cent gold or a palladium/iridium or palladium/rhodium bimetal containing 1 to 15 atom per cent iridium or rhodium is used as the catalyst and the reaction medium contains up to 0.01 mol/l bromide ions and up to 2 mol/l of an acid.

**2.** Process as claimed in claim 1,
**wherein**
the reaction medium contains 0.000001 mol/l to 0.01 mol/l bromide ions.

**3.** Process as claimed in claim 1 or 2,
**wherein**
the reaction medium contains 0.00001 mol/l to 0.001 mol/l bromide ions.

**4.** Process as claimed in one of the claims 1 to 3,
**wherein**
a palladium/iridium or palladium/rhodium bimetal containing 3 to 10 atom per cent iridium or rhodium is used as the catalyst.

**5.** Process as claimed in one of the claims 1 to 3,
**wherein**

EP 0 574 443 B1

a palladium/gold alloy containing 10 to 50 atom per cent gold is used as the catalyst.

6. Process as claimed in one of the claims 1 to 5,
   **wherein**
   a gas mixture is used which contains up to 20 % by volume hydrogen.

7. Process as claimed in one of the claims 1 to 6,
   **wherein**
   the total pressure during the reaction is at least 10 bar.

8. Process as claimed in claim 7,
   **wherein**
   the total pressure is 40 to 200 bar.

9. Process as claimed in one of the claims 1 to 8,
   **wherein**
   the reaction temperature is in the range of 15 to 70°C.

10. Process as claimed in one of the claims 1 to 9,
    **wherein**
    the reaction medium contains 0.001 mol/l to 0.5 mol/l acid.

11. Process as claimed in claim 10,
    **wherein**
    the acid is phosphoric acid and/or sulphuric acid.

12. Process as claimed in one of the claims 1 to 11,
    **wherein**
    the reaction medium contains less than 0.5 % by volume liquid organic components.

13. Process as claimed in one of the claims 1 to 12,
    **wherein**
    the catalyst is present in the form of a finely dispersed metal powder.

14. Process as claimed in claim 13,
    **wherein**
    a catalyst is used which has been produced by reduction of a palladium halogenide and a gold, iridium or rhodium halogenide in the desired ratio to one another in an aqueous solution using a reducing agent, in particular sodium borohydride, and subsequent removal of the halogenide ions.

15. Process as claimed in one of the claims 1 to 12,
    **wherein**
    the catalyst is present bound to a solid supporting material.

16. Process as claimed in claim 15,
    **wherein**
    the supporting material is selected from the group comprising activated charcoal, materials based on silicic acid, silicon carbide, zeolites, titanium dioxide, zirconium dioxide and aluminium oxide.

17. Process as claimed in claim 16,
    **wherein**
    a supporting material of aluminium oxide is used.

18. Process as claimed in one of the claims 15 to 17,
    **wherein**
    the proportion of catalytically active metal is 0.1 to 10 % by weight in relation to the total weight of metal and supporting material.

16

**19.** Process as claimed in one of the claims 15 to 18,
**wherein**
a catalyst is used which has been produced by reducing a palladium halogenide and a gold, iridium or rhodium halogenide in the desired ratio to one another in an aqueous solution and in the presence of the appropriate amount of supporting material using a reducing agent, in particular a formate, and subsequently removing the halogenide ions.

**20.** Process as claimed in one of the claims 15 to 19,
**wherein**
a palladium/gold alloy with a content of 9 to 95 atom % gold on a solid support is used.

**21.** Process as claimed in claim 20,
**wherein**
the solid support is carbon.

**22.** Process as claimed in claim 21,
**wherein**
a palladium/gold alloy cotaining 10 to 50 atom % gold on an aluminium oxide support is used as the catalyst.

**23.** Process as claimed in claim 22,
**wherein**
a catalyst is used which is produced by mixing a hydrochloric acid solution of Pd chloride and Au chloride in the desired ratio Pd:Au with the appropriate amount of aluminium oxide, heating at a weakly acidic pH value, adding a reducing agent, in particular a formate, in excess and removing the chloride ions after the reduction.

**Revendications**

**1.** Procédé de préparation de peroxyde d'hydrogène par réaction d'un mélange gazeux contenant de l'hydrogène et de l'oxygène, dans un milieu réactionnel aqueux contenant moins de 2 % en volume de constituants organiques liquides et en présence d'un catalyseur métallique, caractérisé en ce que l'on utilise comme catalyseur un alliage palladium/or contenant 5 à 95 % en atomes d'or ou un bimétal palladium/iridium ou palladium/rhodium contenant 1 à 15 % en atomes d'iridium ou de rhodium, et en ce que le milieu réactionnel contient jusqu'à 0,01 mole/l d'ions bromure et jusqu'à 2 moles/l d'un acide.

**2.** Procédé selon la revendication 1, caractérisé en ce que le milieu réactionnel contient 0,000001 mole/l à 0,01 mole/l d'ions bromure.

**3.** Procédé selon la revendication 1 ou 2, caractérisé en ce que le milieu réactionnel contient 0,00001 mole/l à 0,001 mole/l d'ions bromure.

**4.** Procédé selon l'une des revendications 1 à 3, caractérisé en ce que l'on utilise comme catalyseur un bimétal palladium/iridium ou palladium/rhodium contenant 3 à 10 % en atomes d'iridium ou de rhodium.

**5.** Procédé selon l'une des revendications 1 à 3, caractérisé en ce que l'on utilise comme catalyseur un alliage palladium/or contenant 10 à 50 pour cent en atomes d'or.

**6.** Procédé selon l'une des revendications 1 à 5, caractérisé en ce que l'on utilise un mélange gazeux qui contient jusqu'à 20 % en volume d'hydrogène.

**7.** Procédé selon l'une des revendications 1 à 6, caractérisé en ce que la pression totale est d'au moins 10 bars pendant la réaction.

**8.** Procédé selon la revendication 7, caractérisé en ce que la pression totale est de 40 à 200 bars.

**9.** Procédé selon l'une des revendications 1 à 8, caractérisé en ce que la température réactionnelle est comprise entre 15 et 70°C.

**10.** Procédé selon l'une des revendications 1 à 9, caractérisé en ce que le milieu réactionnel contient 0,001 mole/l à 0,5 mole/l d'acide.

**11.** Procédé selon la revendication 10, caractérisé en ce que l'acide est l'acide phosphorique et/ou l'acide sulfurique.

**12.** Procédé selon l'une des revendications 1 à 11, caractérisé en ce que le milieu réactionnel contient moins de 0,5 % en volume de constituants organiques liquides.

**13.** Procédé selon l'une des revendications 1 à 12, caractérisé en ce que le catalyseur se trouve sous forme d'une poudre métallique finement divisée.

**14.** Procédé selon la revendication 13, caractérisé en ce que l'on utilise un catalyseur qui a été obtenu par réduction d'un halogénure de palladium et d'un halogénure d'or, d'iridium ou de rhodium dans le rapport désiré en solution aqueuse avec un agent réducteur, en particulier du borohydrure de sodium, puis élimination des ions halogénures.

**15.** Procédé selon l'une des revendications 1 à 12, caractérisé en ce que le catalyseur est fixé sur un support solide.

**16.** Procédé selon la revendication 15, caractérisé en ce que le support est choisi dans le groupe constitué par du charbon actif, des matériaux à base d'acide silicique, du carbure de silicium, des zéolithes, du dioxyde de titane, du dioxyde de zirconium et de l'oxyde d'aluminium.

**17.** Procédé selon la revendication 16, caractérisé en ce que l'on utilise un support en oxyde d'aluminium.

**18.** Procédé selon l'une des revendications 15 à 17, caractérisé en ce que la fraction de métal à activité catalytique est de 0,1 à 10 % en masse par rapport à la masse totale de métal et de support.

**19.** Procédé selon l'une des revendications 15 à 18, caractérisé en ce que l'on utilise un catalyseur qui a été obtenu par réduction d'un halogénure de palladium et d'un halogénure d'or, d'iridium ou de rhodium dans le rapport désiré en solution aqueuse et en présence de la quantité correspondante de support, avec un agent réducteur, en particulier un formiate, puis élimination des ions halogénures.

**20.** Procédé selon l'une des revendications 15 à 19, caractérisé en ce que l'on utilise un alliage palladium/or contenant 9 à 95 % en atomes d'or sur un support solide.

**21.** Procédé selon la revendication 20, caractérisé en ce que le support solide est du carbone.

**22.** Procédé selon la revendication 21, caractérisé en ce que l'on utilise comme catalyseur un alliage palladium/or contenant 10 à 50 % en atomes d'or sur un support d'oxyde d'aluminium.

**23.** Procédé selon la revendication 22, caractérisé en ce que l'on utilise un catalyseur qui a été préparé par un procédé selon lequel on mélange une solution chlorhydrique de chlorure de Pd et de chlorure d'Au dans le rapport Pd:Au souhaité avec la quantité correspondante d'oxyde d'aluminium, on chauffe à un pH faiblement acide, on ajoute un agent réducteur en excès, en particulier un formiate, et on élimine les ions chlorure après la réduction.